# EUROPEAN PATENT SPECIFICATION

(11) **EP 3 940 157 B1**
(45) Date of publication and mention of the grant of the patent: **08.10.2025**
(21) Application number: 21181203.7
(22) Date of filing: 23.06.2021
(51) Int. Cl.: E03C 1/01, E04B 1/344, E04C 2/52, H02G 3/00, E04B 1/00

(54) **PREFABRICATED WALLS FOR BUILDING ROOMS, WALL STRUCTURES FOR A ROOM FOR BUILDINGS AND ASSOCIATED METHODS OF PREPARATION**
VORGEFERTIGTE WÄNDE FÜR GEBÄUDERÄUME, WANDSTRUKTUREN FÜR GEBÄUDERÄUME UND ZUGEHÖRIGE HERSTELLUNGSVERFAHREN
MURS PRÉFABRIQUÉS POUR DES SALLES DE BÂTIMENT, STRUCTURES MURALES POUR UNE SALLE POUR DES BÂTIMENTS ET PROCÉDÉS DE PRÉPARATION ASSOCIÉS

(30) Priority: 03.07.2020 PT 2020116554
(43) Date of publication of application: 19.01.2022
(73) Proprietor: Casais - Engenharia E Construção, S.A., 4700-565 Braga (PT)
(72) Inventor: FERNANDES, José Mário, 4805-313 Guimarães (PT)
(74) Representative: Monteiro Alves, Inês

(56) References cited:
- WO-A2-01/55517
- US-A1- 2009 100 769
- US-A1- 2011 173 925
- US-A1- 2012 083 147

## Description

### TECHNICAL FIELD

The present invention refers to wall structures for buildings in the civil construction area.

### BACKGROUND ART

In the civil construction context for a building having rooms with hydraulic and electric installations, the building of the walls in the referred rooms is typically carried out at the construction site itself.

It is extremely common in the state of the art for the walls of the rooms to be built during the construction, according to the building project, wherein practically all the phases of room building are executed in-site.

To overcome the low productivity referring to the building of walls at the construction site, primarily motivated by the need to breakdown walls, for opening passages for electrical and sanitary installations, and by the need for the finishing steps to be carried out at the construction site, which are time consuming, there have been developed several models of prefabricated walls.

The prefabricated walls of the state of the art are typically prepared from conventional materials, for example, wood, concrete and steel. However, the most recent techniques employ several other materials which can be used on their own or combined, such as fibrous concrete, cement plates, OSB boards, plasterboard, polystyrene foam, waterproof coatings, aluminum, galvanized steel, glass, and thermoacoustic insulation, such as for example, glass wool, stone wool, and PET wool, whereby there are also known embodiments which present coatings for finishing, such as ceramic, lacquered and stainless steel coatings.

### PROBLEMS OF THE STATE OF THE ART

The prefabricated walls of the state of the art overcome some problems related to the techniques for construction of walls at the construction site. However, the concrete prefabricated walls present disadvantages related to their elevated structural mass and the need for adequate supports to allow the correct orthogonal alignment between two adjacent walls. The relatively elevated mass of a prefabricated concrete wall causes an increase in the transport costs and the need for specific machines for the elevating and transposing of these walls at the construction site. One example of state of the art prefabricated wall wherein these problems are observed can be verified in the prefabricated walls disclosed in patent US2001047631A1, of Nolan Edward, published on December 6, 2001.

The prefabricated walls of the state of the art further present the problem of the need for the holes to be opened for the passage of the electrical or hydraulic connecting elements. In this sense, the state of the art discloses prefabricated walls prepared from lighter materials, which however are not configured for the due installation of electrical or hydraulic connecting elements, as can be verified in the prefabricated walls disclosed in patent application US2012317895A1, of Salzman Michael et al, published on December 20, 2012. The prefabricated walls disclosed in this state of the art reference end by being limited to open workspaces, for example. Alternatively, the electrical and hydraulic piping end up by being apparent in the wall structure, which is not desirable in many applications. In this manner, since there may be the need to break specifically a prefabricated wall for the passage of a piping, for example, many of the advantages associated to the prefabricated walls are lost off-site, since the referred holes will need to be closed at the construction site and the finishing redone.

However, the continuing need to carry out the installation of electrical, hydraulic, gas connecting and data connecting elements in the prefabricated walls contributes to a high cost in productivity, since it causes the flow of a large number of workers on the construction, many times phased, since the teams for the installation of the electrical, hydraulic, gas and data are different. In this manner, the delivery time for a building for final use is significantly delayed.

The patent application US2012083147 A1, of Schuyler Robert Kevin; Welch Bryan Thomas, published on April 5, 2012, refers to a movable wall panel system, which induces a plurality of movable wall panels. A first electrical connector of one panel is automatically coupled to a second electrical connector of an adjacent panel as the panels are moved from a folded storage position to an extended use position to electrically couple the adjacent panels together automatically.

The patent application WO0155517 A2, of Weiss Arvin; Weiss Arvin S, published on August 2, 2001, refers to a system and method of panelized construction for use in construction of a building module, such as a residential housing addition. A plurality of pre-fabricated panels, such as wall panels, roof panels, floor panels, and ceiling panels may be provided to decrease on-site building time. The panels may comprise one or more covering layers pre-installed on a frame. The panels may also comprise pre-installed insulation or other core materials. The panels may further comprise a pre-installed portion of a house system, such as an electrical system.

The patent application US2009100769A1 describes a prefabricated bathroom assembly and the methods for its manufacture and installation. This technology involves constructing bathroom units off-site and delivering them to the construction site as a single piece or in partially prefabricated components for on-site assembly. The prefabricated units can include a bathtub or shower pan, tile surrounds, a ceiling, and finishing face trim for seamless integration with adjoining walls and ceilings. The assembly aims to reduce construction time, labor costs, and coordination complexities associated with traditional on-site bathroom construction.

### SUMMARY OF THE INVENTION

The present invention is defined by the claims. Any subject-matter falling outside the scope of the claims is provided for information purposes only.

The present invention refers to a wall structure for a room for buildings (12) comprising at least two prefabricated walls for building rooms (1) comprising at least two adjacent panels (2,2') connected by means of at least one pivoting element (3); **and**
each panel (2,2') comprising a frame (4, 4') formed by at least two vertical profiles (5, 5') orthogonally connected to at least two horizontal profiles (6, 6'); **and**
each pivoting element (3) simultaneously connecting a first vertical profile (5) of a first panel (2) and a second vertical profile (5') of a second panel (2'), wherein the referred vertical profiles (5, 5') are adjacent; **and**
each panel (2, 2') comprising at least one coating plate (7, 7') fixed to the frame (4, 4'); **and**
at least one connecting element being incorporated through at least one of the panels (2, 2'), wherein a first extremity of the referred connecting element is placed on the front face of at least one of the panels (2, 2') and the second extremity of the referred connecting element is placed on the opposite rear face; **and**
the connecting element is a hydraulic connecting element (8, 8'), wherein the hydraulic connecting element (8,8') is connected to a device selected from the group consisting of a hydraulic device or a sanitary device, wherein said hydraulic device or sanitary device is arranged on the front face of said panel (2,2').

The present invention refers, in a second aspect, to a method for the preparation of a wall structure for a room for buildings (12), as defined in the first aspect of the invention, comprising the following steps:
a) Formation of a frame (4,4') by means of the orthogonal connection between at least two vertical profiles (5, 5') and at least two horizontal profiles (6,6');
b) Fixing of at least one coating plate (7,7') to the frame (4,4');
c) Formation of a panel (2,2') with the incorporation of at least one connecting element through at least one of the panels (2,2'), wherein a first extremity of the referred connecting element is placed on the front panel (2,2') face and the second extremity of the referred connecting element is placed on the opposite rear face, and wherein the connecting element is a hydraulic connecting element (8,8');
d) Connection of at least two adjacent panels (2, 2') by means of at least one pivoting element (3); and comprising the further following steps:
   i) Folding of at least two prefabricated wall for building rooms (1), prepared in the previous step, wherein the panels (2, 2') are folded by means of pivoting elements (3) of the referred prefabricated wall for building rooms (1);
   ii) Connection of at least two prefabricated walls for building rooms (1) by fixation means, which connect the vertical profiles of the two foldable walls, which are adjacent one another.

### SOLUTION OF THE PROBLEM

To solve the problems of the state of the art there is the extremely significant contribution of the prior installation, still in the prefabrication phase, of the connecting elements for the hydraulic, electrical systems, gas and data supply. This prior installation is carried out by the incorporation of the referred connecting elements by means of the prefabricated wall panels.

In one of the embodiments of the present invention, the problems of the state of the art are solved by means of a folding prefabricated wall by means of at least one pivoting element.

The solution of the problems further comprises the construction of walls with lighter materials fixed to a frame that serves as a structural component for the panels of the prefabricated walls.

The combination of light materials for the construction of the panels together with the joining of the panels by pivoting elements allows that the prefabricated walls be assembled at the construction site without the need for specific support elements to orthogonally fixate adjacent walls.

### ADVANTAGEOUS EFFECTS OF THE INVENTION

The prefabricated walls for building rooms expedite the installation process of the piping and the respective hydraulic, or sanitary in rooms, namely the bathrooms and kitchens.

Additionally, the times for labor and plumbers that are present in a construction are reduced. As regards the plumbers the dislocation of these professionals to the construction site for long periods is dispensed.

The present invention further provides the reduction in the quantity of work to be executed at the construction and consequent reduction of displaced labor and risks of work accidents, since the flow of people at work in the installation of the hydraulic, electrical, gas and data utilities is reduced.

The delivery time of the construction and the respective operational costs can be significantly reduced, since the connections for the connecting of the hydraulic, electrical, gas and data utilities are assembled in the prefabricated foldable walls at the production unit of said walls, eliminating the work in phases of the different teams of professionals to install each one of the utilities at the construction site.

The aspects related to the finishing of the walls in the context of the adequate installation of connections for connecting the utilities can be standardized and better controlled in the production units of the prefabricated foldable walls, that is, in an off-site environment, enabling a higher warranty of the quality of the products.

Additionally, the present invention provides independence for carrying out the jobs, namely, the manufacture of the foldable walls, the transport thereof and assembly, regardless of the atmospheric or other conditions of the construction.

In the embodiments of the invention where the walls are foldable, there are additional advantages, and which are extremely significant as regards the reduction of costs in the transport of the referred walls from the production unit to the place of use at the construction site. In this embodiment, the walls are transported in a bidimensional manner, that is, they are transported with all the panels of the foldable walls in the same plane, that is, the walls are transported in an unfolded manner. In this manner, it is possible to transport a larger quantity of prefabricated wall units per volume unit of vehicle used.

The prefabricated walls of the invention also allow a much more practical assembly at the construction site, due to the possibility of easily checking the plumb. Further, the prior incorporation of the connecting elements to the utilities contributes to the reduction of residues in the site and reduction of noise level.

The prefabricated walls of the invention can also be reused, that is, after being used in a determined construction, they can be flatly dismounted and subsequently reassembled in another building. The technical characteristics of the invention related to the efficient and practical mode of connection with the utility networks (power, water, sewer, gas and data) are also aligned with ease to carry out the reverse procedure, that is, to disconnect the connecting elements of the referred utility networks. Therefore, the prefabricated walls can be much more useful in itinerant or transitory buildings, for example the buildings used for large events, where the structures and buildings are specially assembled for the event and are subsequently dismounted with the possibility of being used in other buildings. These advantageous aspects of the present invention are aligned with the modern circular economy requirements since the reusing of the prefabricated walls of the present invention brings many benefits in terms of sustainability and efficient use of materials and energy resources.

### BRIEF DESCRIPTION OF DRAWINGS

With the intention of providing an understanding of the principles according to the embodiments of the present invention, reference will be made to the embodiments illustrated in the figures and to the language used to describe them. In any case, it must be understood that there is no intention of limiting the scope of the present invention to the contents of the figures. Any subsequent alterations or modifications of the inventive characteristics shown herein, as well as any additional application of the principles and embodiments of the invention shown, which would occur normally to a person skilled in the art having knowledge of this description, are considered as being within the scope of the claimed invention.
Figure 1 - illustrates a prefabricated wall embodiment for bathroom with connecting elements for sanitary ware;
Figure 2 - illustrates a prefabricated wall embodiment for bathroom with connecting elements for a shower;
Figure 3 - illustrates a prefabricated wall embodiment for bathroom or kitchen with connecting elements for a sink;
Figure 4 - illustrates a wall structure for a bathroom comprising three prefabricated wall modules;
Figure 5 - illustrates a connection mode for foldable prefabricated walls;
Figure 6 - illustrates a top view of a wall structure for a kitchen;
Figure 7 - illustrates a perspective view of a wall structure for a bathroom;
Figure 8 - illustrates a perspective view of a wall structure for a bathroom;
Figure 9 - illustrates a wall structure with a reinforcement structure;
Figure 10 - illustrates an embodiment for a prefabricated wall for a bathroom with connecting elements for sanitary ware showing frame and profile views; and
Figure 11 - illustrates a prefabricated wall embodiment for bathroom or kitchen with connecting elements showing frame and profile views.

### DESCRIPTION OF THE EMBODIMENTS

The present invention refers to a wall structure for a room for buildings (12) comprising at least two prefabricated walls for building rooms (1) comprising at least two adjacent panels (2, 2') connected by means of at least one pivoting element (3); and
each panel (2,2') comprising a frame (4, 4') formed by at least two vertical profiles (5, 5') orthogonally connected to at least two horizontal profiles (6, 6'); and
each pivoting element (3) simultaneously connecting a first vertical profile (5) of a first panel (2) and a second vertical profile (5') of a second panel (2'), wherein the referred vertical profiles (5, 5') are adjacent; and
each panel (2, 2') comprising at least one coating plate (7, 7') fixed to the frame (4, 4'); and by
at least one connecting element being incorporated through at least one of the panels (2, 2'), wherein a first extremity of the referred connecting element is placed on the front face of at least one of the panels (2, 2') and the second extremity of the referred connecting element is placed on the opposite rear face; and
the connecting element is a hydraulic connecting element (8, 8'), wherein the hydraulic connecting element (8,8') is connected to a device selected from the group consisting of a hydraulic device or a sanitary device, wherein said hydraulic device or sanitary device is arranged on the front face of said panel (2,2').

In the preferred embodiments of the present invention, the pivoting element (3) is a hinge. There may be several hinges installed to connect adjacent vertical profiles (5, 5'), the quantity of hinges being determined by reason of the weight and height of the foldable wall. Typically, there may be installed a first hinge on the upper part, a second hinge in the central part and a third hinge in the lower part of adjacent vertical profiles (5, 5'). In the preferred embodiments, the pivoting elements (3) can be inlaid in the vertical profiles (5, 5') so that said elements are not visible when the foldable walls are folded and installed to form a wall structure for a room for buildings.

The prefabricated wall structure is executed using metallic profiles, usually used for applying plasterboard. In the preferred embodiments of the present invention, the vertical profile (5, 5') is an upright profile. In the preferred embodiments of the present invention, the horizontal profile (6, 6') is a U-shaped channel profile.

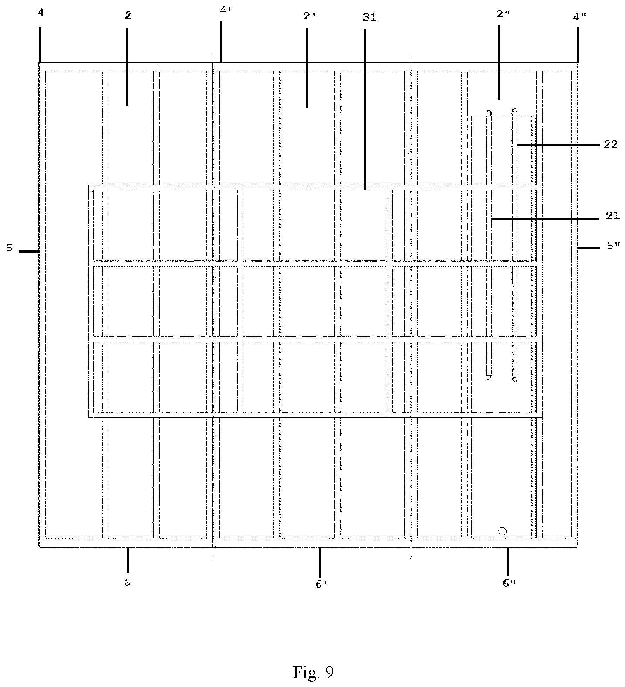

Preferably, subsequently to the formation of the frame (4, 4'), a reinforcement structure is incorporated (31) to guarantee that the prefabricated wall does not deform and is always framed, wherein the referred reinforcement structure (31) comprises for example a matrix of longitudinal and transversal tubes, provisionally fixed to the prefabricated wall (1) with pivoting elements (3). The referred reinforcement structure, as illustrated in figure 9, avoids that the prefabricated walls of the invention suffer alterations in the alignment of their frames (4, 4') and plates (7, 7') during the transport from the manufacturing location of the prefabricated walls to the place of installation of same. The use of a reinforcement structure (31) is particularly preferred when the coating plates (7, 7') are made from plasterboard, which does not present an adequate mechanical resistance. The reinforcement structure (31) can comprise lateral supports or perforations for the insertion of side handles, to allow the manual moving of the prefabricated walls during the transport thereof, both in the wall factory as at the construction site. At the moment when the prefabricated wall will be installed at the construction site, the reinforcement structure is removed, and may be subsequently reused in another prefabricated wall for the same purposes.

In the preferred embodiments of the present invention, the coating plate (7, 7') is made of a material selected from a group consisting of a rigid polystyrene foam, a rigid polystyrene foam reinforced with fiberglass, a rigid polystyrene foam reinforced with fiberglass and coated with synthetic mortar, plywood, a chipboard of long, oriented wood particles (OSB), a board with two or more layers of glued wood, a cross-laminated wooden board, a plate with ceramic coating, a plasterboard and composites thereof.

A chipboard of long, oriented wood particles is a chipboard of long, oriented wood particles glued and arranged in layers, indicated for structural reinforcement of the foldable wall, being also known as OSB (oriented strand board) panel. A cross-laminated wooden board is a prefabricated solid plate, indicated for structural reinforcement of the prefabricated wall, being also known as CLT panel (cross laminated timber).

Typically, a prefabricated wall for building rooms (1, 1') can comprise several coating plates (7, 7'), for example, on the rear face of the foldable wall according to the invention there can be fixed to the frame a plasterboard plate (7, 7') and in the front face of the foldable wall there can be fixed to the frame a plate (7, 7') with ceramic coating. Between the plasterboard and the ceramic coating plates there can be arranged a central chipboard of long, oriented wood particles (OSB). Preferably, the plates (7, 7') can be fixed to the frame (4, 4') by means of the fixation means known to the state of the art, for example washers.

In the embodiments related to the wall structures for shower cabins, the plates (7, 7') made of rigid polystyrene foam reinforced with fiberglass and of rigid polystyrene foam reinforced with fiberglass and coated with synthetic mortar are particularly preferred, since these materials are the coating for plasters and tiles of all kinds. Additionally, the plates made of rigid polystyrene foam can be applied over any surface and are impermeable to humidity, they are insulating, light, and stable.

In the preferred embodiments, of the present invention, the hydraulic connecting element (8, 8') is selected from one or more of the groups consisting in pipe portion, a valve, a faucet, a pipe tip, a curve, a knee, a T, a union, a fork, a connection for an outside flush toilet, a toilet connection and a siphon.

Therefore, a panel (2, 2') can comprise several incorporated hydraulic connecting elements, whereby subsequently to the assembly of the foldable walls at the construction site, to form a room, the hydraulic and sanitary devices can be easily connected to the connection points on the front faces of the prefabricated walls. As examples of hydraulic and sanitary devices that are capable of being installed, there may be cited the sinks, bathtubs, showers, faucets, valves and bathroom furniture. The connection points arranged on the front faces of the foldable walls can be adapted to connect to the hydraulic and sanitary devices by means known in the state of the art, for example, by thread, gluing and fitting. The hydraulic connecting elements incorporated in the panel (2, 2') and arranged on the rear face of the referred panel can be connected in a similar manner to the piping and water and sewer distribution networks.

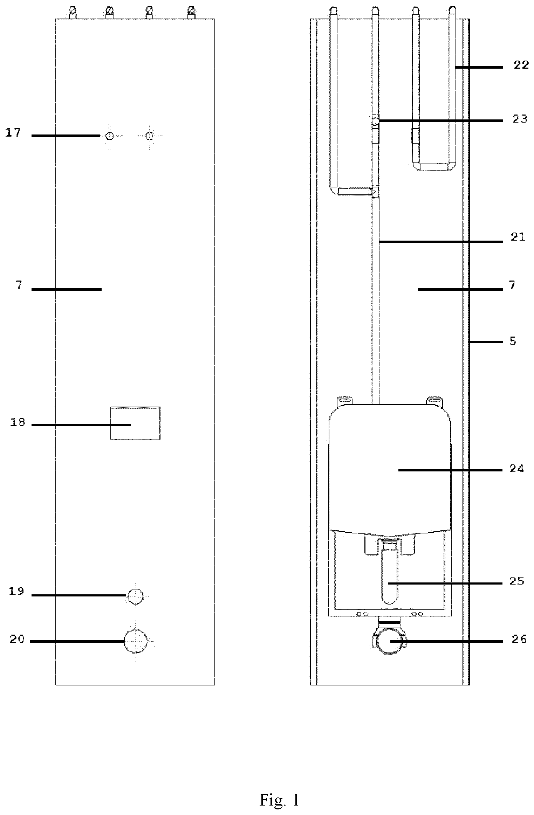

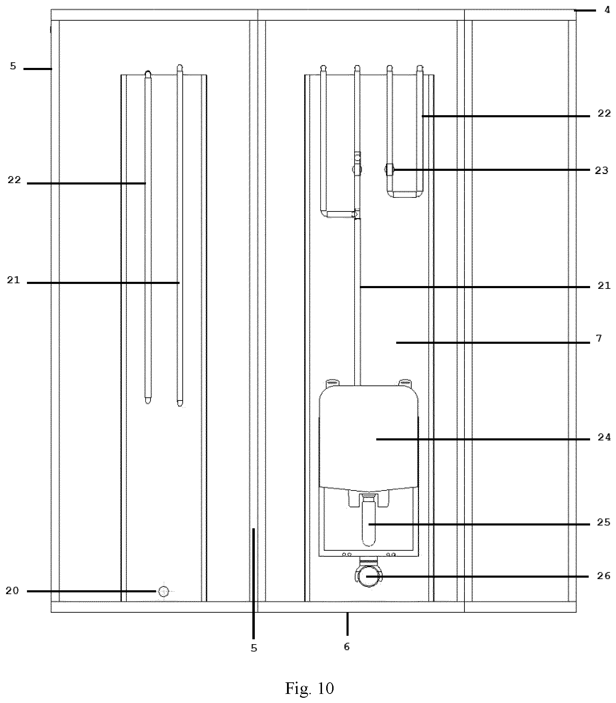

As illustrated in figure 1 on the left, a coating plate (7) is prepared with a series of prior perforations and openings defined according to the connecting elements to be installed. In this illustrated embodiment of the prefabricated wall, as seen on the right, there are incorporated to the plate (7) several hydraulic connecting elements (8), namely a cold water pipe (21) and a hot water pipe (22), fixed to the plate (7) by means of clamps disposed on the prior perforations (16). Additionally, there are incorporated taps (23) having access to the user on the front panel face (7) through the openings (17). In a similar manner, a flush toilet (24) is arranged with an opening for a discharge plate (18) and an opening for discharge tube (19), through which passes a discharge tube (25) and an opening for a lead-through (20) through which passes a lead-through (26). As illustrated in figure 1, several types of connections can be used as hydraulic connecting elements (8), such as knees, bends and connection joints. In figure 10 there are observed the same elements of figure 1 inserted in a frame (4), formed by vertical (5) and horizontal (6) profiles.

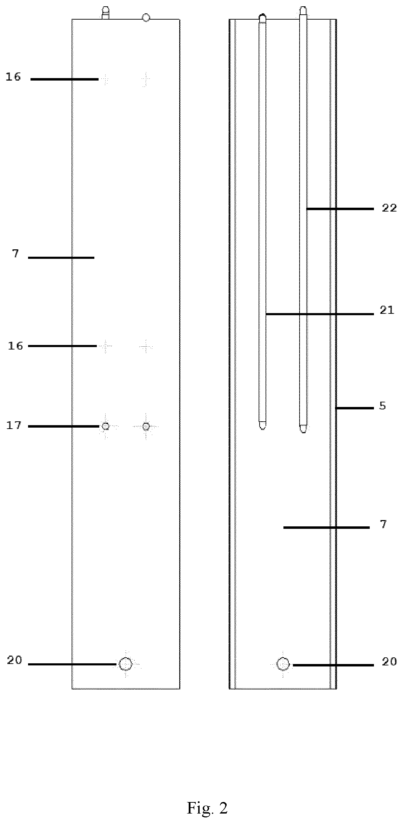

In another embodiment of the present invention, as illustrated in figure 2, a coating plate (7) is prepared with prior openings and perforations for hydraulic connecting elements for a shower to be connected. In this manner, a cold water pipe (21) and a hot water pipe (22) are fixed to the plate (7) by means of clamps placed on the prior perforations (16). Additionally, taps (23) are accessible to the user on the front plate face (7) by means of openings (17).

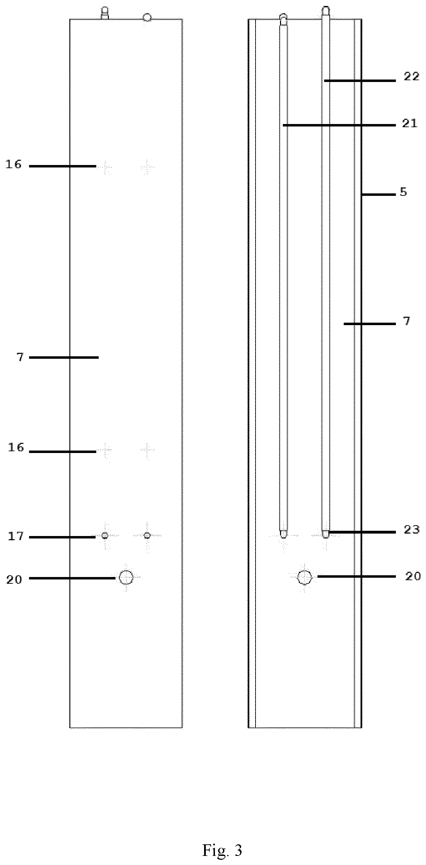

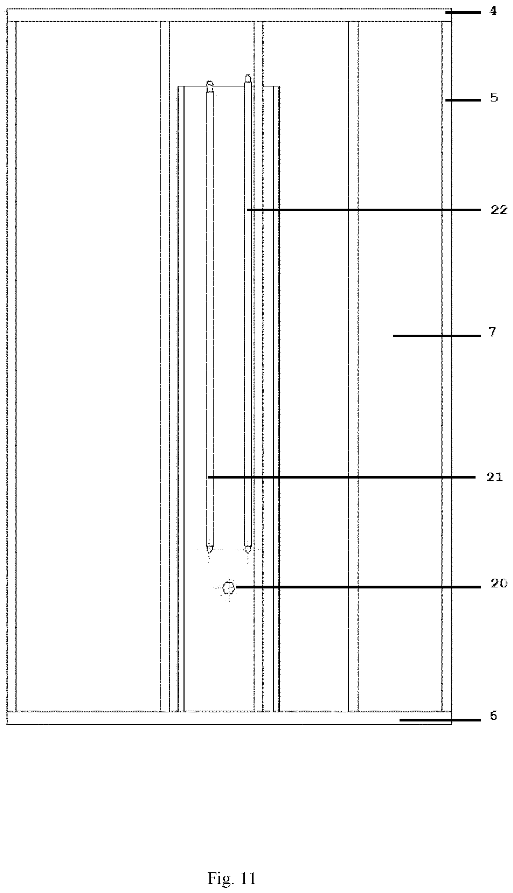

In another embodiment of the present invention, as illustrated in figure 3, a coating plate (7) is prepared with prior openings and perforations for connecting the hydraulic connecting elements to a wall wherein there will be installed a sink. In this manner, a cold water pipe (21) and a hot water pipe (22) are fixed to the plate (7) by means of clamps arranged in the prior perforations (16) and clamps. Additionally, taps (23) are accessible to the user in the front face of the plate (7) by means of openings (17). The referred plate (7) also has an opening (20) for lead-through, wherein is inserted the respective lead-through (26) of the sink. In figure 11 there are observed the same elements of figure 3 inserted in a frame (4) formed by vertical (5) and horizontal (6) profiles.

Therefore, a panel (2, 2') can comprise several hydraulic (8, 8') connecting elements incorporated. Similarly, subsequently to the assembly of the prefabricated walls at the construction site, to form a room, the referred connecting elements arranged on the rear faces of the prefabricated walls can easily be connected to the utility networks, namely water supply, and sewage collection. The connecting elements arranged on the front faces of the foldable walls can be easily connected to the devices which use the respective utilities, such as showers, sinks and sanitary ware in the case of hydraulic connecting elements.

In the preferred embodiments of the present invention, the prefabricated wall for building rooms (1) can comprise more than two panels. Preferably, the referred wall comprises three panels (2,2',2"), wherein each pair of adjacent panels is connected by at least one pivoting element (3).

The method for the preparation of a wall structure of a room for buildings (12), as defined in the first aspect of the invention, comprises the following steps:
a) Formation of a frame (4,4') by means of the orthogonal connection between at least two vertical profiles (5, 5') and at least two horizontal profiles (6, 6');
b) Fixing of at least one coating plate (7,7') to the frame (4,4');
c) Formation of a panel (2,2') with the incorporation of at least one connecting element through at least one of the panels (2,2'), wherein a first extremity of the referred connecting element is placed on the front panel (2,2') face and the second extremity of the referred connecting element is placed on the opposite rear face, and wherein the connecting element is a hydraulic connecting element (8, 8');
d) Connection of at least two adjacent panels (2, 2') by means of at least one pivoting element (3); and by comprising the further following steps:
   i) Folding of at least two prefabricated wall for building rooms (1), prepared in the previous step, wherein the panels (2, 2') are folded by means of pivoting elements (3) of the referred prefabricated wall for building rooms (1);
   ii) Connection of at least two prefabricated walls for building rooms (1) by fixation means, which connect the vertical profiles of the two foldable walls, which are adjacent one another.

A prefabricated wall for building rooms (1), according to the first aspect of the invention, forms a wall structure for a room for buildings (12) when the panels are folded (2, 2') by means of the pivoting elements (3) of the referred prefabricated wall for building rooms (1).

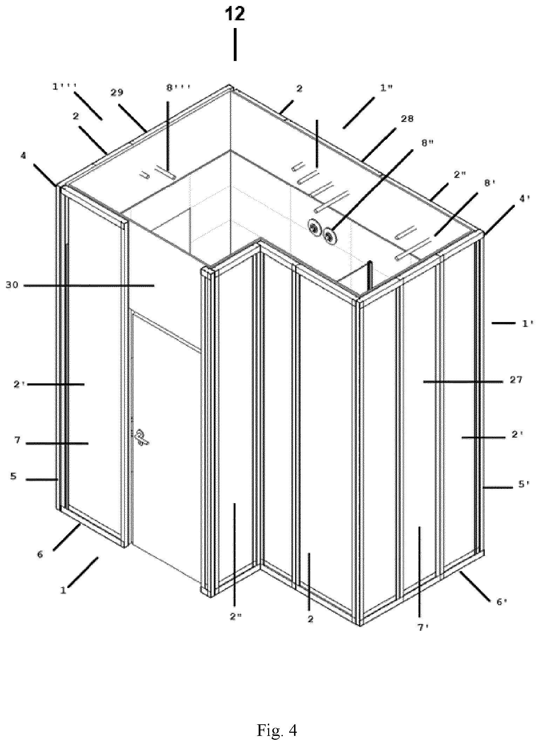

The number of panels (2, 2') is relative to the number of walls of the rooms. In an illustrative manner, as presented in figure 4, a wall structure for a bathroom can comprise four prefabricated walls (1,1',1",1‴). The prefabricated walls (1, 1') are foldable by means of pivoting elements (3), not shown in this figure. The prefabricated wall (1) has two panels (2, 2') and the prefabricated wall (1') has three panels (2,2',2"). Each one of the panels (2,2',2") comprises a frame (4, 4') formed by vertical profiles (5, 5') and horizontal profiles (6, 6'). The prefabricated walls (1,1',1",1‴) can present specific functionalities according to the project for the structure of the walls, being illustrated a prefabricated wall for a shower cabin (27), a prefabricated wall for sanitary ware (28), a prefabricated wall for a sink (29) and a prefabricated wall for a door (30). In each one of the prefabricated walls there are previously installed hydraulic connecting elements (8',8",8‴) represented in figure 4.

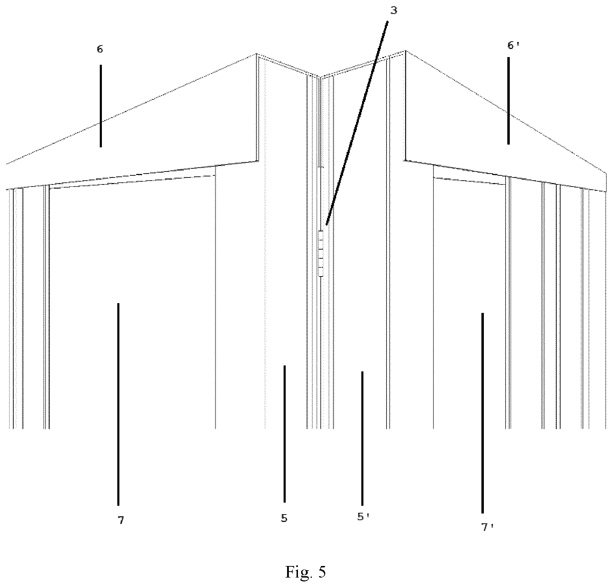

As illustrated in figure 5, each panel (2, 2') is connected by means of a pivoting element (3). In this example of a shower cabin, the hydraulic connecting elements can be arranged solely in one of the three panels.

In the preferred embodiments of the present invention, at least two prefabricated walls for building rooms (1) can be connected by means of the fixation means, which connect the vertical profiles of two foldable walls, which are adjacent one another, to form more complex and larger rooms, namely, kitchens, bathrooms and changing rooms for gyms and sports venues. The fixation means are known to the state of the art and may be cited as being screws.

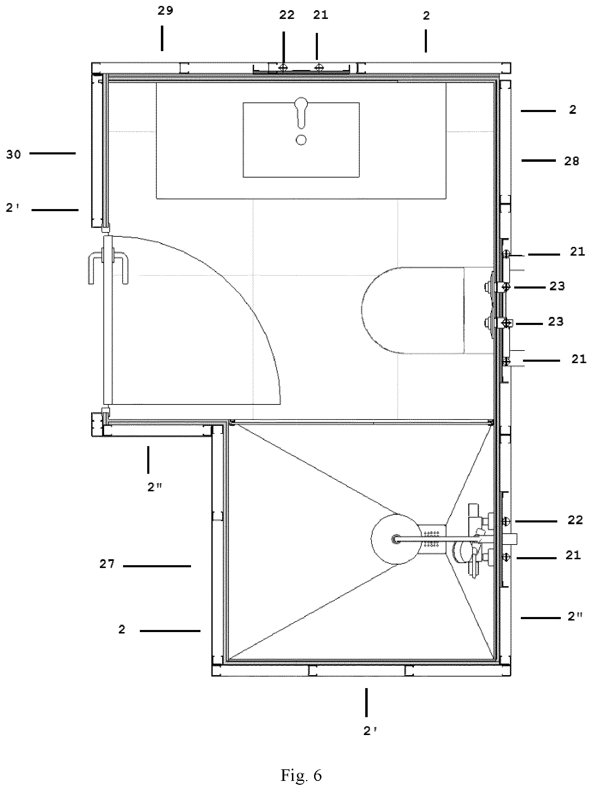

As illustrated in figure 6, four prefabricated walls for building rooms (1) are connected to produce a wall structure for a bathroom. A first prefabricated wall of the shower cabin (27), which comprises three panels (2,2',2"), is connected by means of screws to a panel (2) of a second prefabricated wall for sanitary ware (28), which is connected by means of screws to a panel (2) of a third prefabricated wall for a sink (29), which is connected by means of screws to a panel (2, 2') of a fourth prefabricated wall for a door (30), which, finally, connects to the first prefabricated wall of the shower cabin (27), forming the bathroom. The hydraulic connecting elements are previously installed in the respective prefabricated walls, such as the cold water pipes (21), the hot water pipes (22) and the taps (23). Once the walls are assembled at the construction site, the connection of the respective hydraulic connecting elements with the sinks, the sanitary ware and the shower are extremely facilitated, not being necessary to break any wall or redo finishing on the surfaces of the prefabricated walls. As regards the embodiment for a prefabricated wall for building rooms (1) including an opening for a door, as will be understood by a person skilled in the art, there may similarly be included an opening for a window.

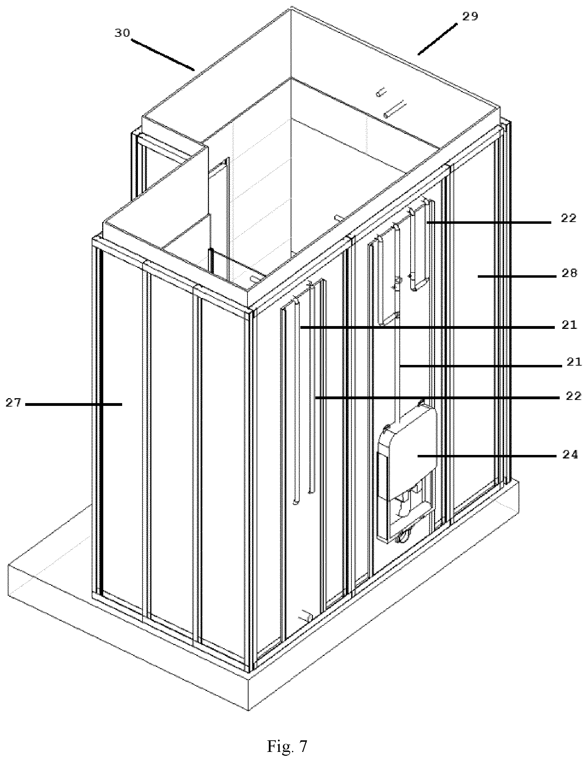

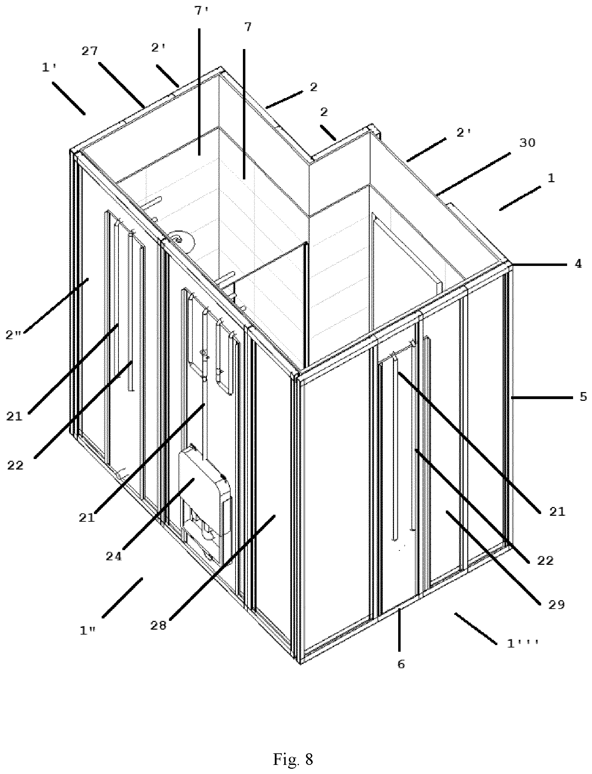

In figures 7 and 8, there are presented perspective views of the prefabricated walls that are assembled to form a bathroom, there being illustrated a prefabricated wall for a shower cabin (27), a prefabricated wall for sanitary ware (28), a prefabricated wall for a sink (29), and a prefabricated wall for a door (30). In each one of the prefabricated walls there are previously installed connecting elements, such as the cold water piping (21), hot water piping (22), and indoor flush toilet (24).

In the preferred embodiments of the present invention, a composition for joints is applied over the intersection between the panels (2, 2') of at least one prefabricated wall for building rooms (1), to impermeabilize the wall structure. Alternatively, a sealing tape can be applied over the intersection between the panels (2, 2') of at least one prefabricated wall for room building (1), to provide a differentiated level of impermeabilization and sealing. As will be understood by a person skilled in the art, in terms of impermeabilization solutions for the intersection of the panels (2, 2') there can be employed combinations of sealing means, namely compositions for joints and sealing tapes, wherein the waterproof sealing tapes which are known to the state of the art can be used, namely, the self-adhesive silicone tapes, the sealing elastomer tapes and the polypropylene tapes coated with thermoplastic elastomers. In the preferred embodiments according to the invention, the combination of sealing means can be used in areas which demand a high level of impermeabilization, for example the wall structures for showers.

Therefore, in the context of the method for the preparation of a wall structure for a room for buildings (12), the preparation step of at least one prefabricated wall for building rooms (1) can be executed at a location away from the construction site. On the other hand, the connection of the prefabricated walls for building rooms (1) for the assembly of the wall structure of a room for buildings can be executed at the construction site, whereby the prefabricated walls can be fixed to the slab by means of fixation means, for example screws. Next, the prefabricated walls are connected to one another by means of fixation means. The next step of the installation at the construction site comprises the application of a composition for joints, for example a silicone. The wall structure is ready to be connected to the necessary utilities by means of the pertinent hydraulic (8, 8') connecting elements.

The expression "room" used herein refers to each one of the divisions of a building.

The expression "utility" used herein refers to a resource or material used routinely in a building, namely, the water supply, and the sewage connection.

The expression "front" used herein refers to a frontal portion of an object or portion of an object.

The expression "rear" used herein refers to a rear portion or which is in a position opposite the front portion of an object or portion of an object.

The raw materials described above are provided as an illustration of the present invention and must not be interpreted to limit it. The terminology used with the purpose of describing specific embodiments, according to the present invention, must not be interpreted to limit the invention. As used in the description, the definite and indefinite articles in the singular form, aim at the interpretation of also including the plural forms, unless the context of the description indicates, explicitly, the contrary. It will be understood that the expressions "comprise" and "include" when used in this description, specify the presence of the characteristic, of the elements, the components, the steps and the related operations, however they do not exclude the possibility of other characteristics, elements, components, steps and operations also being contemplated.

All the alterations, providing that they do not modify the essential characteristics of the following claims, must be considered as being within the scope of protection of the present invention.

### REFERENCE SIGNS LIST

1. A prefabricated wall for building rooms
2. A panel
3. A pivoting element
4. A frame
5. A vertical profile
6. A horizontal profile
7. A coating plate
8. A hydraulic connecting element
12. A wall structure for a room for buildings
16. A prior perforation
17. An opening for a tap
18. An opening for a discharge plate
19. An opening for a discharge pipe
20. An opening for a lead-through
21. A piping for cold water
22. A piping for hot water
23. A tap
24. An indoor flush toilet
25. A discharge pipe
26. A lead-through
27. A prefabricated wall for a shower cabin
28. A prefabricated wall for sanitary ware
29. A prefabricated wall for a sink
30. A prefabricated wall for a door
31. A reinforcement structure

### LIST OF CITATIONS

Follows the list of citations:

### PATENT LITERATURE

Patent Application US2001047631A1, of Nolan Edward, published on December 6, 2001;
Patent Application US2012317895A1, of Salzman Michael et al, published on December 20, 2012.
Patent application US2012083147 A1, of Schuyler Robert Kevin; Welch Bryan Thomas, published on April 5, 2012.
Patent application WO0155517 A2, of Weiss Arvin; Weiss Arvin S, published on August 2, 2001.

**NON-PATENT LITERATURE**

## Claims

1. A wall structure for a room for buildings (12) comprising at least two prefabricated walls for building rooms (1), whereby each prefabricated wall for building rooms (1) comprising at least two adjacent panels (2,2'), each panel (2,2') including a frame (4,4') formed by at least two vertical profiles (5,5') orthogonally connected to at least two horizontal profiles (6,6'); and
each panel (2,2') comprising at least one coating plate (7,7') fixed to the frame (4,4');
**and by**
at least one connecting element being incorporated through at least one of the panels (2,2'), wherein
a first extremity of the referred connecting element is placed on a front panel face and the second extremity of the referred connecting element is placed on an opposite rear face; **and**
the connecting element is a hydraulic connecting element (8,8'), wherein the hydraulic connecting element (8,8') is connected to a device selected from the group consisting of a hydraulic device or a sanitary device, wherein said hydraulic device or sanitary device is arranged on the front face of said panel (2,2'), and **characterized in that**
the panels (2,2') are connected by means of at least one pivoting element (3), and wherein each pivoting element (3) simultaneously connects a first vertical profile (5) of a first panel (2) and a second vertical profile (5') of a second panel (2'), and wherein
the vertical profiles (5,5') are adjacent.

2. The wall structure for a room for buildings (12), according to the previous claim, **characterized by** the pivoting element (3) being a hinge.

3. The wall structure for a room for buildings (12), according to any of the previous claims, **characterized by** the vertical profile (5, 5') being an upright profile.

4. The wall structure for a room for buildings (12), according to any of the previous claims, **characterized by** the horizontal profile (6, 6') being a U-shaped channel profile.

5. The wall structure for a room for buildings (12), according to any of the previous claims, **characterized by** the coating plate (7, 7') being made of a material selected from a group consisting of a rigid polystyrene foam, a rigid polystyrene foam reinforced with fiberglass, a rigid polystyrene foam reinforced with fiberglass and coated with synthetic mortar, plywood, a chipboard of long, oriented wood particles (OSB), a plate with two or more layers of glued wood, a cross-laminated wooden board, a plate with ceramic coating, a plasterboard and composites thereof.

6. The wall structure for a room for buildings (12), according to any of the previous claims, **characterized by** the hydraulic connecting element (8, 8') being selected from the group consisting of pipe portion, a valve, a faucet, a pipe tip, a curve, a knee, a T, a union, a fork, a connection for an outside flush toilet, a toilet connection and a siphon.

7. The wall structure for a room for buildings (12), according to any of the previous claims, **characterized by** the prefabricated wall for building rooms (1) comprising three panels (2,2',2"), wherein each of the adjacent panels is connected by means of at least one pivoting element (3).

8. The wall structure for a room for buildings (12), according to any one of the previous claims, **characterized by** comprising the connection of at least two prefabricated walls for building rooms (1) by means of the fixing means, which connect the vertical profiles of two foldable walls, which are adjacent to one another.

9. The wall structure for a room for buildings (12), according to any one of the previous claims, **characterized by** a composition for joints being applied over the intersection of the panels (2, 2') of at least one prefabricated wall for building rooms (1).

10. The wall structure for a room for buildings (12), according to any one of the previous claims, **characterized by** a sealing tape being applied over the intersection between the panels (2, 2') of at least one prefabricated wall for building rooms (1).

11. The wall structure for a room for buildings (12), according to any one of the previous claims, **characterized by** the room being a bathroom.

12. The wall structure for a room for buildings (12), according to any one of the previous claims, **characterized by** the room being a kitchen.

13. A method for the preparation of a wall structure of a room for buildings (12), as defined in any one of the previous claims, **characterized by** comprising the following steps:
a) Formation of a frame (4,4') by means of the orthogonal connection between at least two vertical profiles (5, 5') and at least two horizontal profiles (6,6');
b) Fixing of at least one coating plate (7,7') to the frame (4,4');
c) Formation of a panel (2,2') with the incorporation of at least one connecting element through at least one of the panels (2,2'), wherein a first extremity of the referred connecting element is placed on the front panel (2,2') face and the second extremity of the referred connecting element is placed on the opposite rear face, and wherein the connecting element is a hydraulic connecting element (8,8');
d) Connection of at least two adjacent panels (2, 2') by means of at least one pivoting element (3); and by comprising the further following steps:
i) Folding of at least two prefabricated wall for building rooms (1), prepared in the previous step, wherein the panels (2, 2') are folded by means of pivoting elements (3) of the referred prefabricated wall for building rooms (1);
ii) Connection of at least two prefabricated walls for building rooms (1) by fixation means, which connect the vertical profiles of the two foldable walls, which are adjacent one another.

14. The method for the preparation of a wall structure for room for buildings (12), according to the preceding claim, **characterized by** sealing means being applied over the intersection between the panels (2, 2') of at least one prefabricated wall for building rooms (1) wherein the sealing means are selected from one or more of the groups consisting of a composition for joints and a sealing tape.

15. The method for the preparation of a wall structure of a room for buildings (12), according to any one of the claims 13 or 14, **characterized by** the step of the preparation of the at least one prefabricated wall for building rooms (1) being executed in a location away from the construction site of the building.

## Patentansprüche

1. Eine Wandkonstruktion für einen Raum für Gebäude (12), die mindestens zwei vorgefertigte Wände für den Bau von Räumen (1) umfassen, wobei jede vorgefertigte Wand für den Bau von Räumen (1) mindestens zwei benachbarte Paneele (2,2') umfasst, wobei jedes Paneel (2,2') einen durch mindestens zwei vertikale Profile (5,5') geformten Rahmen (4,4') beinhaltet, die orthogonal mit mindestens zwei horizontalen Profilen (6, 6') verbunden sind; **und**
wobei jedes Paneel (2,2') mindestens eine Beschichtungsplatte (7,7') umfasst, die am Rahmen (4,4') fixiert ist; **und wobei**
mindestens ein Verbindungselement durch mindestens eines der Paneele (2,2') integriert wird, wobei eine erste Extremität des genannten Verbindungselements auf einer Vorderseite des Paneels platziert ist und die zweite Extremität des genannten Verbindungselements auf einer gegenüberliegenden Rückseite platziert ist; **und**
das Verbindungselement ein hydraulisches Verbindungselement (8,8') ist, wobei das hydraulische Verbindungselement (8,8') mit einer Vorrichtung aus der Gruppe ausgewählt wird, die aus einer hydraulischen Vorrichtung und einer sanitären Vorrichtung besteht, wobei die genannte hydraulische Vorrichtung oder sanitäre Vorrichtung auf der Vorderseite des genannten Paneels angebracht ist (2,2'), und **dadurch gekennzeichnet, dass**
die Paneele (2,2') mittels mindestens einem schwenkenden Element (3) verbunden sind, und wobei jedes schwenkende Element (3) gleichzeitig ein erstes vertikales Profil (5) eines ersten Paneels (2) und ein zweites vertikales Profil (5') eines zweiten Paneels (2') verbindet, und wobei
die vertikalen Profile (5,5') benachbart sind.

2. Die Wandkonstruktion für einen Raum für Gebäude (12), nach dem vorhergehenden Anspruch, **dadurch gekennzeichnet, dass** das schwenkende Element (3) ein Scharnier ist.

3. Die Wandkonstruktion für einen Raum für Gebäude (12), nach einem der vorhergehenden Ansprüche, **dadurch gekennzeichnet, dass** das vertikale Profil (5, 5') ein senkrechtes Profil ist.

4. Die Wandkonstruktion für einen Raum für Gebäude (12), nach einem der vorhergehenden Ansprüche, **dadurch gekennzeichnet, dass** das horizontale Profil (6, 6') ein U-förmiges Kanalprofil ist.

5. Die Wandkonstruktion für einen Raum für Gebäude (12), nach einem der vorhergehenden Ansprüche, **dadurch gekennzeichnet, dass** die Beschichtungsplatte (7, 7') aus einem Material hergestellt wird, das aus einem festen Polystyrolschaum, einem mit Glasfaser verstärkten Polystyrolschaum, einem mit Glasfaser verstärkten und mit synthetischem Mörtel beschichteten Polystyrolschaum, Sperrholz, einer Spanplatte aus langen, orientierten Holzpartikeln (OSB), einer Platte mit zwei oder mehreren Schichten aus verleimten Holz, einer kreuzweise verleimten Holzplatte, einer Platte mit Keramikbeschichtung, einer Gipskartonplatte und Verbundwerkstoffen daraus besteht.

6. Die Wandkonstruktion für einen Raum für Gebäude (12), nach einem der vorhergehenden Ansprüche, **dadurch gekennzeichnet, dass** das hydraulische Verbindungselement (8, 8') aus einer Gruppe ausgewählt wird, die aus einem Rohrabschnitt, einem Ventil, einem Wasserhahn, einer Rohrspitze, einem Bogen, einem Kniestück, einem T-Stück, einer Verschraubung, einer Vergabelung, einem Anschluss für eine außenliegende Spültoilette, einem WC-Anschluss und einem Siphon.

7. Die Wandkonstruktion für einen Raum für Gebäude (12), nach einem der vorhergehenden Ansprüche, **dadurch gekennzeichnet, dass** die vorgefertigten Wände für den Bau von Räumen (1) drei Paneele (2,2',2") umfassen, wobei jedes der benachbarten Paneele mittels mindestens einem schwenkenden Element (3) verbunden ist.

8. Die Wandkonstruktion für einen Raum für Gebäude (12), nach einem der vorhergehenden Ansprüche, **dadurch gekennzeichnet, dass** diese die Verbindung von mindestens zwei vorgefertigten Wänden für den Bau von Räumen (1) mittels Befestigungsmitteln umfassen, welche die vertikalen Profile zwei zueinander benachbarter und gefalteter Wände verbinden.

9. Die Wandkonstruktion für einen Raum für Gebäude (12), nach einem der vorhergehenden Ansprüche, **dadurch gekennzeichnet, dass** ein Verbindungsmaterial über dem Schnittpunkt der Paneele (2, 2') von mindestens einer vorgefertigten Wand für den Bau von Räumen (1) angewendet wird.

10. Die Wandkonstruktion für einen Raum für Gebäude (12), nach einem der vorhergehenden Ansprüche, **dadurch gekennzeichnet, dass** ein Dichtband über dem Schnittpunkt der Paneele (2, 2') von mindestens einer vorgefertigten Wand für den Bau von Räumen (1) angewendet wird.

11. Die Wandkonstruktion für einen Raum für Gebäude (12), nach einem der vorhergehenden Ansprüche, **dadurch gekennzeichnet, dass** der Raum ein Badezimmer ist.

12. Die Wandkonstruktion für einen Raum für Gebäude (12), nach einem der vorhergehenden Ansprüche, **dadurch gekennzeichnet, dass** der Raum eine Küche ist.

13. Ein Verfahren zur Vorbereitung einer Wandkonstruktion für einen Raum für Gebäude (12), nach einem der vorhergehenden Ansprüche, **dadurch gekennzeichnet, dass** es die folgenden Schritte umfasst:
a) Aufbau eines Rahmens (4,4') mittels einer orthogonalen Verbindung zwischen mindestens zwei vertikalen Profilen (5, 5') und mindestens zwei horizontalen Profilen (6, 6');
b) Befestigung mindestens einer Beschichtungsplatte (7,7') an einem Rahmen (4,4');
c) Aufbau eines Paneels (2,2') mit der Einarbeitung mindestens eines Verbindungselements durch mindestens eines der Paneele (2,2'), wobei eine erste Extremität des genannten Verbindungselements auf einer Vorderseite des Paneels (2,2') platziert ist und die zweite Extremität des genannten Verbindungselements auf einer gegenüberliegenden Rückseite platziert ist, und wobei das Verbindungselement ein hydraulisches Verbindungselement (8,8') ist;
d) Verbindung von mindestens zwei benachbarten Paneelen (2, 2') mittels mindestens einem schwenkenden Element (3); und es ferner die folgenden Schritte umfasst:
i) Faltung von mindestens zwei vorgefertigten Wänden für den Bau von Räumen (1), im vorhergehenden Schritt vorbereitet, wobei die Paneele (2, 2') mittels schwenkender Elemente (3) der genannten vorgefertigten Wände für den Bau von Räumen (1) gefaltet werden;
ii) Verbindung von mindestens zwei vorgefertigten Wänden für den Bau von Räumen (1) durch Befestigungselemente, welche die vertikalen Profile zweier zueinander benachbarter und faltbarer Wände verbinden.

14. Das Verfahren zur Vorbereitung einer Wandkonstruktion für einen Raum für Gebäude (12), nach einem der vorhergehenden Ansprüche, **dadurch gekennzeichnet, dass** Dichtungselemente über dem Schnittpunkt der Paneele (2, 2') von mindestens einer vorgefertigten Wand für den Bau von Räumen (1) angewendet wird, wobei die Dichtungselemente von einer oder mehreren Gruppen ausgewählt werden, die aus einem Verbindungsmaterial und einem Dichtband bestehen.

15. Das Verfahren zur Vorbereitung einer Wandkonstruktion für einen Raum für Gebäude (12), nach einem der Ansprüche 13 oder 14, **dadurch gekennzeichnet, dass** der Schritt der Vorbereitung von mindestens einer vorgefertigten Wand für den Bau von Räumen (1) an einem Ort außerhalb der Baustelle des Gebäudes ausgeführt wird.

## Revendications

1. Une structure murale pour une pièce pour les bâtiments (12), comprenant au moins deux murs préfabriqués pour la construction de pièces pour les bâtiments (1), par lequel chaque mur préfabriqué pour la construction de pièces pour les bâtiments (1) comprenant au moins deux panneaux adjacents (2, 2'), chaque panneau (2, 2') incluant un cadre (4, 4') formé d'au moins deux profilés verticaux (5, 5') connectés orthogonalement à au moins deux profilés horizontaux (6, 6'), **et**
chaque panneau (2, 2') comprenant au moins une plaque de revêtement (7, 7') fixée au cadre (4, 4'); **et par**
au moins un élément de liaison étant incorporé à travers au moins un des panneaux (2, 2'), dans lequel une première extrémité dudit élément de liaison est disposée sur une face avant du panneau, et une seconde extrémité dudit élément de liaison est disposée sur une face arrière opposée; **et**
l'élément de liaison est un élément de liaison hydraulique (8, 8'), dans lequel l'élément de liaison hydraulique (8, 8') est connecté à un dispositif choisi parmi le groupe constitué d'un dispositif hydraulique ou d'un dispositif sanitaire, dans lequel ledit dispositif hydraulique ou dispositif sanitaire est disposé sur la face avant dudit panneau (2, 2'), et **caractérisé en ce que**
les panneaux (2, 2') sont reliés au moyen d'au moins un élément pivotant (3), et dans lequel chaque élément pivotant (3) reliant simultanément un premier profilé vertical (5) d'un premier panneau (2) et un second profilé vertical (5') d'un second panneau (2') ; et dans lequel
les profilés verticaux (5, 5') sont adjacents

2. La structure murale pour une pièce pour les bâtiments (12), selon l'une quelconque des revendication précédente, **caractérisée en ce que** l'élément pivotant (3) étant une charnière.

3. La structure murale pour une pièce pour les bâtiments (12), selon l'une quelconque des revendications précédentes, **caractérisée en ce que** le profilé vertical (5, 5') étant un profilé vertical.

4. La structure murale pour une pièce pour les bâtiments (12), selon l'une quelconque des revendications précédentes, **caractérisée en ce que** le profilé horizontal (6, 6') étant un profilé en forme de U.

5. La structure murale pour une pièce pour les bâtiments (12), selon l'une quelconque des revendications précédentes, **caractérisée en ce que** la plaque de revêtement (7, 7') étant constituée d'un matériau choisi parmi le groupe comprenant une mousse rigide de polystyrène, une mousse rigide de polystyrène renforcée par des fibres de verre, une mousse rigide de polystyrène renforcée par des fibres de verre et revêtue de mortier synthétique, du contreplaqué, un panneau de particules longues, des bois orientées (OSB), une plaque composée de deux ou plusieurs couches de bois collé, une plaque de bois lamellé-croisé, une plaque avec du revêtement céramique, une plaque de plâtre et leurs composites.

6. La structure murale pour une pièce pour les bâtiments (12), selon l'une quelconque des revendications précédentes, **caractérisée en ce que** l'élément de liaison hydraulique (8, 8') étant choisi parmi le groupe comprenant une portion de tuyau, une vanne, un robinet, une extrémité de tuyau, une courbe, un genou, un T, un raccord, une fourche, un raccord pour chasse d'eau extérieure, un raccord de toilette et un siphon.

7. La structure murale pour une pièce pour les bâtiments (12), selon l'une quelconque des revendications précédentes, **caractérisée en ce que** le mur préfabriqué de pièces pour les bâtiments (1) comprenant trois panneaux (2, 2', 2"), dans lesquels chacun des panneaux adjacents est relié au moyen d'au moins un élément pivotant (3)

8. La structure murale pour une pièce pour les bâtiments (12), selon l'une quelconque des revendications précédentes, **caractérisée en ce qu'elle** comprend la connexion d'au moins deux murs préfabriqués pour la construction de pièces pour les bâtiments (1) au moyen de moyens de fixation, lesquels relient les profilés verticaux de deux murs pliables adjacents, qui sont adjacents les uns aux autres.

9. La structure murale pour une pièce pour les bâtiments (12), selon l'une quelconque des revendications précédentes, **caractérisée en ce qu'une** composition pour joints étant appliquée sur l'intersection des panneaux (2, 2') d'au moins un mur préfabriqué pour la construction de pièces pour les bâtiments (1).

10. La structure murale pour une pièce pour les bâtiments (12), selon l'une quelconque des revendications précédentes, **caractérisée en ce qu'un** ruban d'étanchéité étant appliqué sur l'intersection entre les panneaux (2, 2') d'au moins un mur préfabriqué pour la construction de pièces pour les bâtiments (1).

11. La structure murale pour une pièce pour les bâtiments (12), selon l'une quelconque des revendications précédentes, **caractérisée en ce que** la pièce étant une salle de bain.

12. La structure murale pour une pièce pour les bâtiments (12), selon l'une quelconque des revendications précédentes, **caractérisée en ce que** la pièce étant une cuisine.

13. Procédé de préparation d'une structure murale pour une pièce pour les bâtiments (12), telle que définie dans l'une quelconque des revendications précédentes, **caractérisé en ce qu'il** comprend les étapes suivantes :
(a) Formation d'un cadre (4, 4') au moyen de la connexion orthogonale entre au moins deux profilés verticaux (5, 5') et d'au moins deux profilés horizontaux (6, 6') ;
(b) Fixation d'au moins une plaque de revêtement (7, 7') au cadre (4, 4') ;
(c) Formation d'un panneau (2, 2') avec l'incorporation d'au moins un élément de liaison à travers au moins un des panneaux (2, 2'), dans lequel une première extrémité dudit élément de liaison est disposée sur la face avant du panneau (2, 2') et la seconde extrémité de l'élément de liaison mentionné est disposée sur la face arrière opposée, et dans lequel l'élément de liaison est un élément de liaison hydraulique (8, 8') ;
(d) Connexion d'au moins deux panneaux adjacents (2, 2') au moyen d'au moins un élément pivotant (3) ; et en comprenant en outre les étapes suivantes :
(i) Pliage d'au moins deux murs préfabriqués pour la construction de pièces pour les bâtiments (1), préparés à l'étape précédente, dans lequel les panneaux (2, 2') sont pliés au moyen des éléments pivotants (3) dudit mur préfabriqué pour la construction de pièces pour les bâtiments (1) ;
(ii) Connexion d'au moins deux murs préfabriqués pour la construction de pièces pour les bâtiments (1) au moyen de fixation, lesquels relient les profilés verticaux des deux murs pliables, qui sont adjacents l'un à l'autre.

14. Le procédé de préparation d'une structure murale pour une pièce pour les bâtiments (12), selon la revendication précédente, **caractérisé en ce que** des moyens d'étanchéité étant appliqués sur l'intersection entre les panneaux (2, 2') d'au moins un mur préfabriqué pour la construction de pièces (1), dans lequel les moyens d'étanchéité sont choisis parmi un ou plusieurs groupes comprenant une composition pour joints et un ruban d'étanchéité.

15. Le procédé de préparation d'une structure murale pour une pièce pour les bâtiments (12), selon l'une quelconque des revendications 13 ou 14, **caractérisé en ce que** l'étape de préparation d'au moins un mur préfabriqué pour la construction de pièces pour les bâtiments (1) étant réalisée dans un lieu éloigné du chantier de construction du bâtiment.
